**Europäisches Patentamt**

**European Patent Office**

**Office européen des brevets**

(19)

(11) Veröffentlichungsnummer: **0 253 989
B1**

(12)

# EUROPÄISCHE PATENTSCHRIFT

(45) Veröffentlichungstag der Patentschrift:
25.10.89

(51) Int. Cl.⁴: **B62D 25/16**

(21) Anmeldenummer: **87107460.5**

(22) Anmeldetag: **22.05.87**

(54) **Kotflügel.**

(30) Priorität: **25.07.86  DE 3625165**

(43) Veröffentlichungstag der Anmeldung:
**27.01.88 Patentblatt 88/4**

(45) Bekanntmachung des Hinweises auf die Patenterteilung:
**25.10.89 Patentblatt 89/43**

(84) Benannte Vertragsstaaten:
**AT BE CH DE ES FR GB GR IT LI LU NL SE**

(56) Entgegenhaltungen:
**DE-A- 2 908 837**
**DE-A- 3 007 760**
**DE-A- 3 408 091**

(73) Patentinhaber: **AUDI AG,**
**Auto-Union-Strasse 1 Postfach 220,**
**D-8070 Ingolstadt(DE)**

(72) Erfinder: **Adler, Hermann, Kleiststrasse 14,**
**D-8070 Ingolstadt(DE)**
Erfinder: **Erl, Otto, Goethestrasse 3,**
**D-8076 Baar-Ebenhausen(DE)**

(74) Vertreter: **Le Vrang, Klaus, AUDI AG**
**Postfach 220 Patentabteilung I/EQP,**
**D-8070 Ingolstadt(DE)**

## Beschreibung

Die Beschreibung betrifft einen Kotflügel gemäß dem Oberbegriff des Patentanspruches 1.

Derartige Kotflügel sind Stand der Technik (siehe z.B. DE-A 3 408 091), sie sind Bestandteil der Kraftfahrzeugkarosserie und dienen dazu, die Fahrzeugräder zu verkleiden.

Man ist bestrebt, die Kotflügel hinsichtlich ihrer Formgebung zu optimieren, wobei verschiedene Randkriterien zu beachten sind. So ist die leichte Austauschbarkeit eines Kotflügels erwünscht, wobei der Montageaufwand dadurch gesenkt werden kann, daß die Befestigungsstellen, mit denen der Kotflügel an der Karosserie verschraubt ist, verringert werden kann. Es besteht das Bestreben, einen Kotflügel zu schaffen, der ein geringes Eigengewicht hat, wobei die Festigkeit gewährleistet bleiben muß. Weiterhin ist beim Aufbau und bei der Befestigung darauf zu achten, daß das Bauteil keinen Eigenschwingungen unterworfen ist, die durch Resonanzen in kritischen Frequenzbereichen hervorgerufen werden könnten.

Aufgabe der Erfindung ist es, einen gattungsgemäßen Kotflügel zu schaffen, der bei guter Eigensteifigkeit ohne hohe Massenanteile vibrationsfrei mit leichter Montage zu befestigen ist.

Die Aufgabe wird gelöst durch den Hauptanspruch.

Die Merkmale des Hauptanspruches sind eine Kombination einzelner Merkmale, die zur Erreichung der genannten Aufgabenstellung zusammenwirken.

So ist bei dem erfindungsgemäße Kotflügel vorgesehen, daß im vorderen Bereich vor dem Radausschnitt der Kotflügel nicht vollständig bis auf die Unterkante des Fahrzeuges heruntergezogen ist, da dieser Raum ohnehin durch eine Schürze und durch Stoßfänger verdeckt wird. Diese entsprechenden Blechteile des Kotflügels sind deshalb entbehrlich und können zur Gewichtsreduktion weggelassen werden.

Ein Absatz, der im vorderen Bereich als Stufe und im hinteren Bereich als Sicke ausgebildet ist, sorgt für eine Versteifung des Kotflügels, wobei die geometrische Anordnung dieses Absatzes in einen Bereich kommt, der sonst verhältnismäßig leicht Instabilitäten unterworfen wäre. Die Festigkeit in diesem Bereich durch diesen ersten Absatz wird noch dadurch unterstützt, daß der erste Absatz entlang des Radausschnittes um diesen als leichter Vorsprung herumgeführt wird.

Im vorderen Bereich unterhalb dieses Absatzes ist der Radausschnitt nach vorne vorgezogen, wodurch weitere Materialeinsparungen möglich sind.

Zur Befestigung des Stoßfängers sind vier ein Rechteck bildende Löcher vorgesehen, wobei diese vier Löcher in dem Bereich eines durch entsprechende Vorsprünge versteiften Bereiches liegen, so daß in diesem Punkt eine Fixierung des Kotflügels gegeben ist.

Vor diesem vorderen Bereich ist unterhalb des ersten Absatzes ein Flansch zur Befestigung vorgesehen, dieser Be festigungspunkt gewährleistet bei geringem Montageaufwand eine stabile Halterung. Ein weiterer Flansch mit Befestigungsöffnung direkt im vorderen Endbereich des ersten Absatzes ergibt einen zusätzlichen Stabilisierungseffekt.

Oberhalb des ersten Absatzes ist der Kotflügel durch einen Knick einwärtsgebogen, was eine weitere Festigkeit des Bauteiles mit sich bringt. Dieser Knick endet in etwa im oberen Bereich des Ausschnittes für die Scheinwerfer/Blinkereinheit, die vorne eine zusätzliche Stabilisierung des Kotflügels mit sich bringt und über diesen Knick auf diese Weise den Gesamtkotflügel stabilisiert.

Um ein deutliche Festigkeit zu erreichen, ist oberhalb dieses Knicks nochmals ein weiterer Absatz, der als kleine Stufe ausgebildet ist, vorgesehen, die Gesamtkombination des ersten Absatzes, des Knicks und des zweiten Absatzes führt zu einer hohen Eigentragfähigkeit des Blechteiles.

Im oberen hinteren Bereich schließt der Kotflügel an den vorderen Dachpfosten an, dadurch ist eine Festlegung des Bauteiles in diesem Bereich erreicht, wobei gleichzeitig entlang des gesamten oberen Randes ein Flansch vorgesehen wird, der eine Reihe von Befestigungslöchern aufweist.

Bevorzugte Ausführungsformen ergeben sich aus den Unteransprüchen.

Im folgenden wird der erfindungsgemäße Kotflügel im einzelnen anhand der Zeichnung erläutert. Es zeigen:

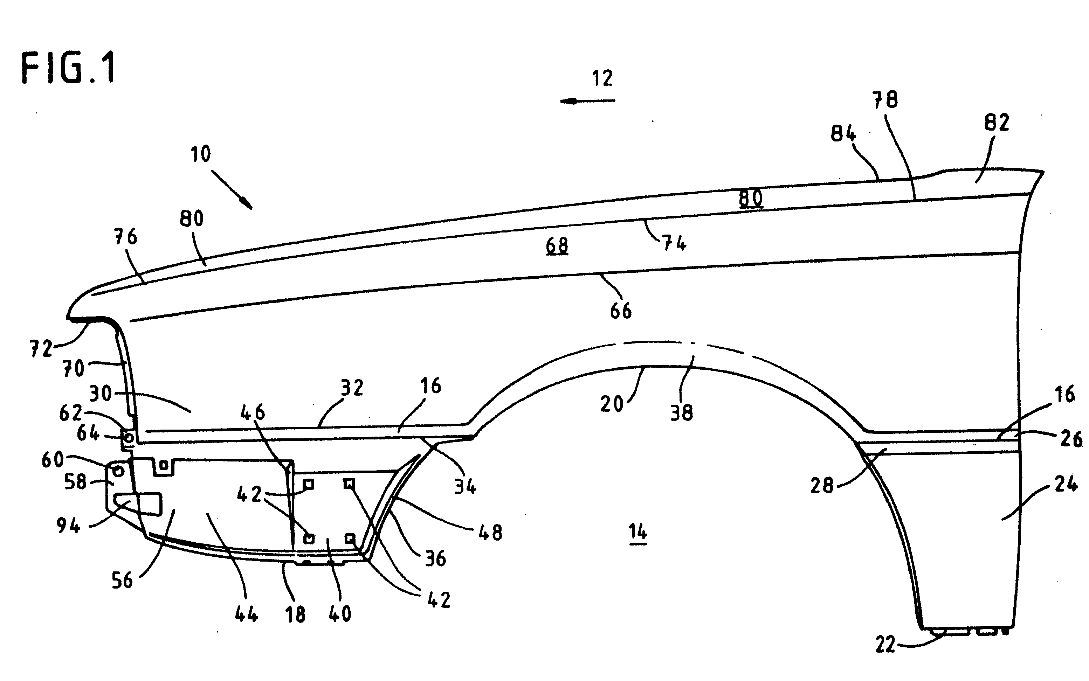

Fig. 1 eine Seitenansicht des erfindungsgemäßen Kotflügels;

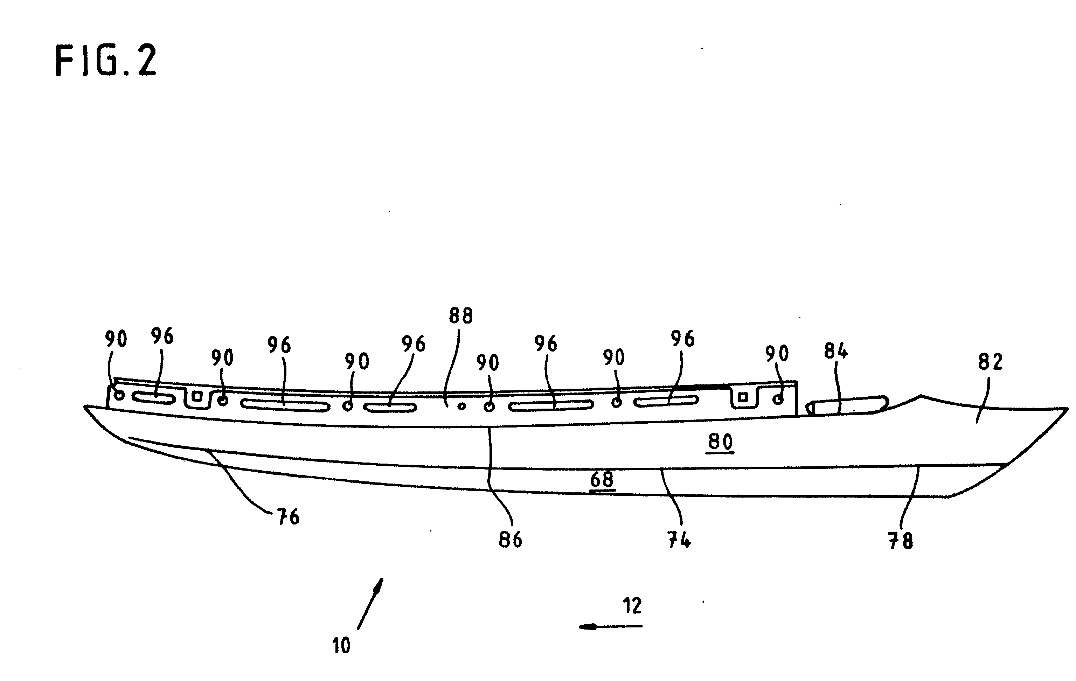

Fig. 2 eine Aufsicht von oben;

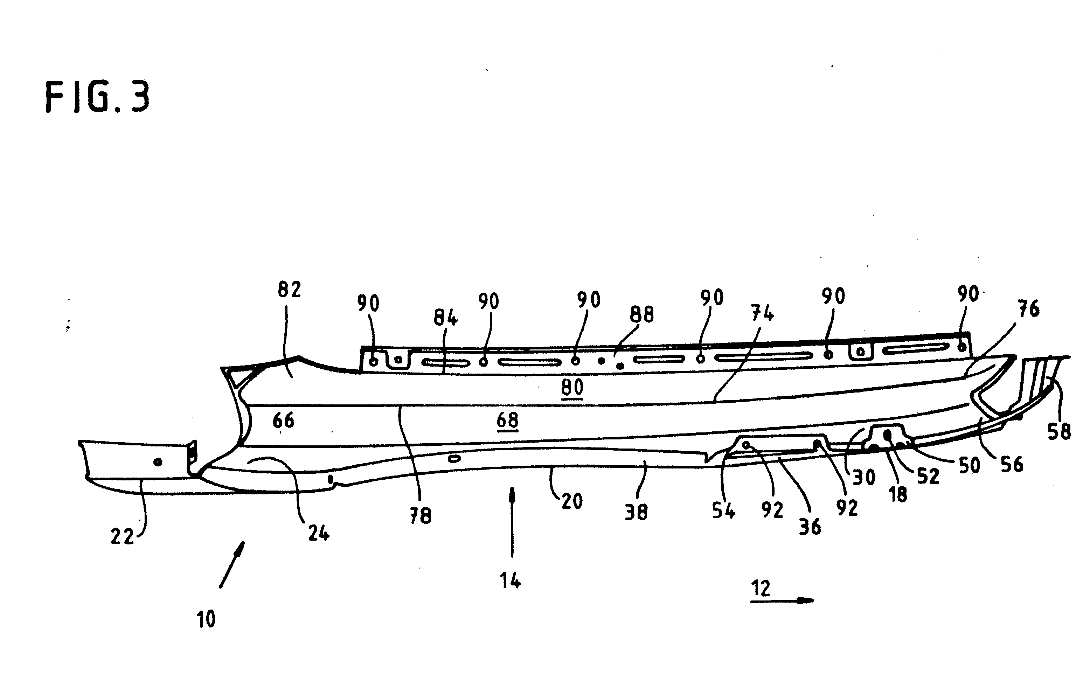

Fig. 3 eine schräg von unten vorgenommene Ansicht, die den Radausschnitt und die innenliegenden Blechteile erkennen läßt; und

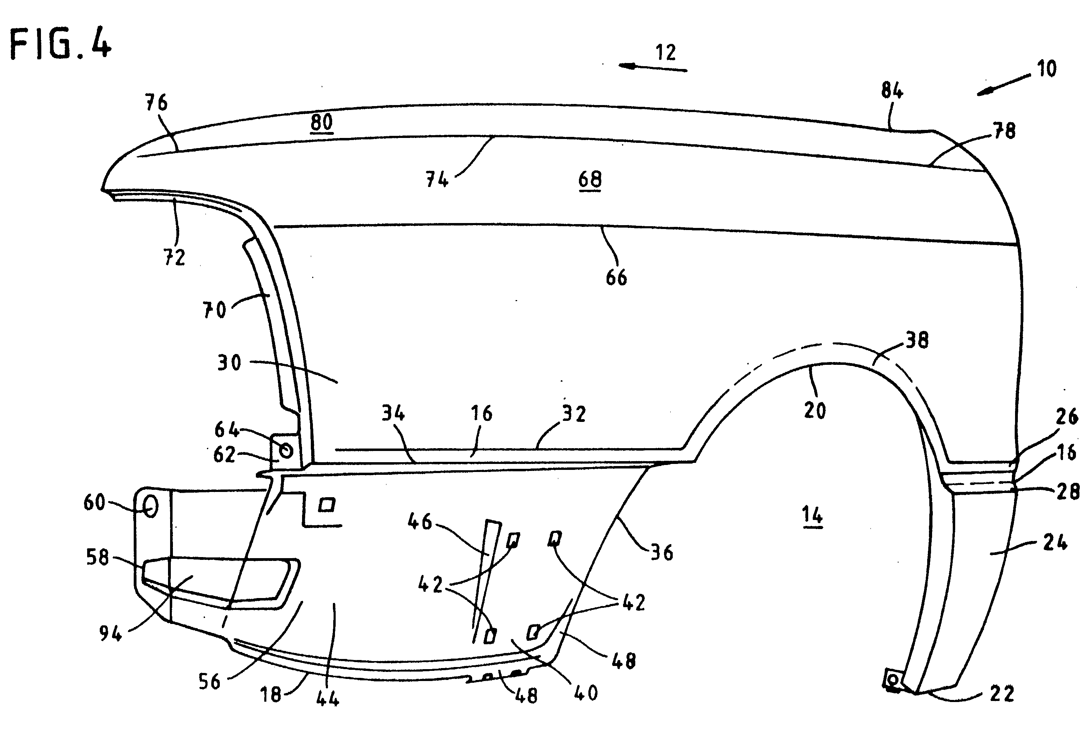

Fig. 4 eine perspektivische Ansicht schräg von vorne.

In den vier Figuren ist ein Kotflügel (10) dargestellt, wobei zur Festlegung die Fahrtrichtung mit dem Pfeil (12) jeweils dargestellt ist.

Der Kotflügel (10) ist üblicherweise ein Blechbauteil, das aus einem Stück gefertigt ist, und besitzt einen Radausschnitt (14). Beidseitig des Radausschnittes (14) verläuft ein Absatz (16), der im vorderen Bereich des Kotflügels den Abstand zwischen dem oberen Scheitelpunkt (20) des Radausschnittes (14) und dem Unterrand (18) des Kotflügels etwa halbiert, während er im hinteren Bereich den Abstand zwischen dem Scheitelpunkt (20) des Radausschnittes (14) und dem unteren Blechrand (22) in etwa drittelt, so daß der Absatz (16) näher am Scheitelpunkt (20) des Radausschnittes (14) als am unteren Rand (22) des hinteren Blechabschnittes (24) liegt.

Der Absatz (16) besteht im hinteren Blechbereich (24) aus einer Vorwölbung (26), unterhalb derer eine Vertiefung (28) oder Sicke (28) liegt, wobei die Vorwölbung (26) in ihrem Verlauf nach vorne als Vorwölbung (38) um den Radausschnitt (14) an seinem Rand (20) herumgezogen wird, um im weiteren Verlauf vor dem Radausschnitt (14) als Vorwölbung (32) allmählich flacher zu werden, bis sie etwa im Bereich (30) fast ausgelaufen ist, dort zumindest gegenüber der übrigen Blechumgebung nur noch leicht vorgewölbt ist. Im vorderen Bereich vor dem Radausschnitt (14) ist unterhalb der Vorwölbung (32) eine Stufe (34) vorgesehen, die einwärts gezogen ist, der darunter liegende Blechbereich (44 und 56) wird im fertig eingebauten Zustand durch einen Stoßfänger abgedeckt.

Der Radausschnitt (14) besitzt einen Rand (20), der einen Teile eines Kreises darstellt, dieser kreisförmige Radausschnittrand (20) ist jedoch im vorderen Abschnitt unterhalb der Stufe (34) nach vorne versetzt, d.h. in dem Bereich unterhalb der Stufe (34) ist der Radausschnittrand (36) mit einem größeren Radius vorgesehen als in dem übrigen Bereich (20) des Radausschnittes (14).

Nach vorne anschließend an den Radausschnitt (36) ist ein hervorspringender Blechbereich (40) vorgesehen, der gegenüber dem davorliegenden Blechbereich (44) eine leichte Stufe (46) aufweist und in den vier Öffnungen (42) eingebracht sind, die in etwa die Eckpunkte eines Rechtecks bilden, wobei der Abstand der Löcher in der Horizontalen 5 cm und in der Vertikalen 7 cm beträgt. Diese rechteckig ausgebildeten Löcher (42) dienen zur Befestigung eines Halters für einen Stoßstangenträger. Erfindungsgemäß ist vorgesehen, daß dieser Bereich mit hoher Eigensteifigkeit und Festigkeit ausgeführt ist, was gefördert wird durch einen nochmals ausgewölbten Rand (48), der zwei Seiten dieses Blechbereichs (40) umgibt und diesen Blechbereich (40) in seinem Auslauf zum Radausschnitt (36) durch eine Auswölbung versteift, genauso wie in dem Bereich, der im Rand unterhalb dieses Blechabschnittes (40) vorgesehen ist. Günstigerweise kann an dieser Stelle noch ein Befestigungsflansch (50) vorgesehen sein, der eine Befestigungsöffnung (52) aufweist.

Der vorgezogene Radausschnittrand (36) ist als Flansch (54) einwärts gebogen und trägt zwei Löcher (92). Diese Befestigungslöcher (92) können als Langlöcher ausgeführt sein und dienen beispielsweise zur Aufnahme einer Radlaufschale.

Der vordere Bereich (56) des Kotflügels unterhalb des Absatzes (16) ist einwärts gebogen und endet dann nach einer erneuten Biegung in einem Flansch (58), der in Fahrtrichtung weist. Der Flansch (58), der im unteren Bereich des Kotflügels dessen vorderes Ende darstellt, besitzt dort ein Befestigungsloch (60) zur Festlegung des Kotflügels. Da dieser Flansch verhältnismäßig hohe Festigkeitsanforderungen erfüllt, ist eine Sicke (94) vorgesehen, die sich von dem Bereich (56) über seinen abgeknickten Teil bis direkt in den Flansch (58) hineinstreckt, diese Sicke (94) hat die Wirkung einer Versteifungsrippe.

Direkt im Anschluß an die Stufe (34) des nach vorne verlaufenden Absatzes (16) ist ein weiterer Flansch (62) vorgesehen, der eine Befestigungsöffnung (64) trägt. Dieser Flansch (62) ist, da er in die Stufe integriert ist, von besonders hoher Festigkeit.

Zum Eigentragverhalten des Kotflügels trägt ein Knick (66) bei, der oberhalb des Radausschnittes (14) vorgesehen ist, er liegt etwa 11 cm oberhalb des oberen Scheitelpunktes (20) des Radausschnittes (14) und verläuft in etwa in horizontaler Richtung. Dieser Knick (66) dient zum Stabilisieren des gesamten flächigen Bauteiles, gleichzeitig kommt ihm eine gewisse stilistische Funktion für die Gesamtlinie des Fahrzeuges zu. Der oberhalb des Knicks (66) liegende Blechbereich (68) ist dementsprechend nicht mehr in etwa vertikal, sondern schon deutlich einwärts gezogen und leitet zur in etwa eben angeordneten Motorhaube über.

Im vorderen Bereich in der Scheinwerferöffnung ist unterhalb des Knicks (66) ein Flansch (70) vorgesehen, an den der Scheinwerfer angeschlossen werden kann und gegen den er sich anlehnen kann, in dem darüberliegenden Bereich (72), dem vorderen Punkt des Blechabschnittes (68) ist kein größerer Flansch stehengelassen, sondern nur eine Anlagekante für den Scheinwerfer vorgesehen.

Ein oberhalb des Knicks (66) verlaufender zweiter Absatz (74) ist in seinem vorderen Bereich (76) in etwa 6 cm von dem Knick (66) beabstandet und in seinem hinteren Bereich (78) in etwa 11 cm von dem Knick (66) beabstandet, er verläuft also nicht vollständig parallel zu dem Knick (66), vielmehr verlaufen Knick (66) und zweiter Absatz (74) nach hinten etwas auseinander. Der zweite Absatz (74), ist als ganz leichte Stufe ausgebildet ist, wobei der Blechbereich (80) oberhalb dieses zweiten Absatzes (74) gegenüber dem darunterliegenden Blechbereich (68) etwas zurücktritt. Der obere Blechbereich (80) geht in seinem hinteren Abschnitt in einen Bereich (82) über, der direkt an den vordersten Dachpfosten, den sogenannten A-Pfosten anschließt, während der weiter davorliegende Rand (84), der zur Motorhaube überführt, an seinem Rand (86) einen tragenden Flansch (88) besitzt, dieser Flansch (88) weist eine Reihe von Befestigungslöchern (90) auf. Bevorzugterweise werden sechs Befestigungslöcher (90) vorgesehen, deren Abstände von vorne nach hinten 20 cm, 20 cm, 20 cm, 15 cm und 18,5 cm betragen, wobei zwischen den Befestigungslöchern Verstärkungssicken (96) vorgesehen sind. Die Wahl des Abstandes zwischen den einzelnen Befestigungslöchern in Verbindung mit den Verstärkungssicken (96) ergeben ein definiertes Knautschver halten des Kotflügels und ermöglichen so bei einem Unfall eine gezielte Energievernichtung durch ein Einfalten des Kotflügels.

Aus Korrosionsschutzgründen wird der Kotflügel in verzinktem Blech ausgeführt.

## Patentansprüche

1. Kotflügel für einen Personenkraftwagen, mit
   – einem Radausschnitt,
   – einem Ausschnitt im vorderen Bereich zur teilweisen Aufnahme von Scheinwerfer/Blinkereinheit, wobei
   – der Kotflügel mindestens einen in Fahrtrichtung verlaufenden Absatz aufweist,
   – in Randbereichen Flansche zur Befestigung von weiteren Teilen und zur Verschraubung mit der übrigen Personenkraftwagenkarosse vorgesehen sind,
   – der Kotflügel (10) in Fahrtrichtung (12) hinter dem Radausschnitt (14) tiefer heruntergezogen ist als vor dem Radausschnitt.

- ein erster Absatz (16) in horizontaler Richtung vor dem Radausschnitt (14) und hinter dem Radausschnitt (14) etwa auf zwei Drittel Höhe zwischen dem unteren Kotflügelrand (22) und dem Scheitelpunkt (20) des Radausschnittes (14) verläuft,
- der Radausschnitt (14) oberhalb des ersten Absatzes (16) etwas nach außen vorgezogen (38) ist, und
- im vorderen Kotflügelbereich, wo der unterhalb des ersten Absatzes (16) liegende Blechbereich (56) einwärts zurücktritt und ein Befestigungsloch (60) aufweist, gekennzeichnet durch folgende Merkmale:

1. der erste Absatz (16) verläuft etwa in halber Höhe zwischen dem unteren Kotflügelrand (18) und dem oberen Scheitelpunkt (20) des Radausschnittes (14) und im hinteren Bereich (24) des Kotflügels ist der erste Absatz (16) durch eine Vorwölbung (26) und eine darunterliegende Vertiefung (28) gebildet,

2. im vorderen Bereich (30) ist der Absatz (16) durch eine leichte Vorwölbung (32) und eine sich unterhalb anschließende, einwärts verlaufende Stufe (34) gebildet,

3. der Radausschnittrand (36) ist im vorderen Kotflügelbereich (30) unterhalb des ersten Absatzes (16) einwärts und in Fahrtrichtung nach vorne versetzt,

4. der Radausschnittbereich (14) oberhalb des ersten Absatzes (16) liegt in etwa in einer Ebene mit der Auswölbung (26) des ersten Absatzes (16),

5. im unteren Bereich des unterhalb des ersten Absatzes (16) vor dem Radausschnitt (14) liegenden Teiles (40) sind vier die Eckpunkte eines Rechtecks bildende Löcher (42) vorgesehen, wobei im Einbauzustand des Kotflügels (10) in der Horizontalen der Abstand von Lochmitte zu Lochmitte ca. 5 cm und in der Vertikalen der Abstand von Lochmitte zu Lochmitte ca. 7 cm beträgt,

6. der die Eckpunkte eines Rechtecks bildenden Löcher (42) tragende Blechbereich (40) ist im Vergleich zu dem vor ihm liegenden Blechbereich (44) nach außen etwas vorspringend (46) ausgebildet,

7. der die Eckpunkte eines Rechtecks bildenden Löcher (42) tragende Blechbereich (40) ist im hinteren und unteren Bereich von einer als nach außen gerichteten Auswölbung (48) gebildeten Versteifungsausformung begrenzt, wobei in diesem Bereich nach unten ein Flansch (50) mit Befestigungsloch (52) und nach hinten zum versetzten Teil des Radausschnittes (14) hin ein einwärts verlaufender Flansch (54) vorgesehen sind,

8. im vorderen Kotflügelbereich (30) ist der unterhalb des ersten Absatzes (16) liegende Blechbereich (56) nach vorne zulaufend einwärts gebogen, um in einem in Fahrtrichtung weisenden Flansch (58) zu enden,

9. im vorderen Endbereich des ersten Absatzes (16) ist ein weiterer Flansch (62) mit Befestigungsöffnung (64) vorgesehen,

10. entlang einer im wesentlichen horizontal verlaufenden Linie etwa 11 cm oberhalb des oberen Scheitelpunktes des Radausschnittes (14) ist der Kotflügel (10) entlang eines Knicks (66) mit seinem oberen Teil (68) einwärts gezogen, wobei im vorderen Bereich etwa in Höhe dieses Knicks (66) der Ausschnitt (70) zur teilweisen Aufnahme von Scheinwerfer/Blinkereinheit seinen oberen Abschluß (72) hat,

11. oberhalb des Knicks (66) verläuft in Fahrtrichtung unter spitzem Winkel zu dem Knick (66) ein zweiter Absatz (74), der im vorderen Bereich (76) zum Knick etwa 6 cm und im hinteren Bereich (78) etwa 11 cm beabstandet ist,

12. der zweite Absatz (74) wird gebildet durch eine in dem Aufwärtsverlauf des Blechs einwärts geführte Stufe,

13. oberhalb des zweiten Absatzes (74) ist der Kotflügelbereich (80) einwärts geführt abgerundet und im hinteren Bereich (82) einwärts vorspringend zur Hinführung zum vorderen Dachpfosten gezogen,

14. vor dem einwärts vorspringenden Bereich (82) zur Hinführung zu dem vorderen Dachpfosten ist der obere Rand (84) des Kotflügels (10) im Abschluß des durch die Ausrundung von der Vertikalen schräg einwärts gezogenen Bereichs durch einen etwa senkrecht nach unten abgeknickten Flansch (86) abgeschlossen, der nach etwa 2,5 bis 3 cm unter einem rechtwinkeligen Knick hin einen horizontalen Flansch (88) überführt,

15. der obere Flansch (88) weist zwischen 15 und 20 cm voneinander beabstandete Befestigungslöcher (90) auf.

2. Kotflügel nach Anspruch 1, dadurch gekennzeichnet, daß der versetzte Teil (36) des Radausschnitts (14) an seinem einwärts verlaufenden Flansch (54) zwei Befestigungslanglöcher (92) im Abstand von 12,5 cm aufweist.

3. Kotflügel nach Anspruch 1 oder 2, dadurch gekennzeichnet, daß der im vorderen Kotflügelbereich (56) nach vorne gezogene Flansch (58) eine bis in den Blechbereich (56) zurückführende Verstärkungssicke (94) aufweist.

4. Kotflügel nach einem der Ansprüche 1 bis 3, dadurch gekennzeichnet, daß in dem den oberen Rand (84) des Kotflügels (12) abschließenden Flansch (88) sechs Bohrungen (90) vorgesehen sind, deren Abstände von vorne nach hinten ca. 20 cm, 20 cm, 20 cm, 15 cm und 18,5 cm betragen.

5. Kotflügel nach einem der Ansprüche 1 bis 4, dadurch gekennzeichnet, daß die vier Eckpunkte eines Rechtecks bildenden Löcher (42) jeweils quadratisch ausgebildet sind und eine Kantenlänge von ca. 1 cm haben.

6. Kotflügel nach einem der Ansprüche 1 bis 5, dadurch gekennzeichnet, daß das Blech des Kotflügels verzinkt ist.

## Claims

1. Mudguard for a passenger vehicle, with
- a wheel opening
- an opening in the forward region for holding part of a headlamp/blinker unit, in which
- the mudguard has at least one shoulder running in the direction of travel,
- flanges for attaching further sections and for bolting to the rest of the passenger vehicle body are provided at the edges,
- the mudguard (10) is extended further down behind the wheel opening (14), in relation to the direction of travel (12), than in front of the wheel opening,
- a first shoulder (16) runs in a horizontal direction in front of the wheel opening (14) and behind the wheel opening (14) at approximately two-thirds of the height between the lower mudguard edge (22) and the vertex (20) of the wheel opening (14),
- the wheel opening (14) is extended slightly outwards (38) above the first shoulder (16), and
- in the forward region of the mudguard the sheet metal region (56) lying below the first shoulder (16) is recessed inwards and has an attachment hole (60), characterized by the following features,

1. the first shoulder (16) runs at a level approximately halfway between the lower edge (18) of the mudguard and the upper vertex (20) of the wheel opening (14) and in the rear region (24) of the mudguard the first shoulder (16) is formed by a projection (26) and a depression (28) lying below it,
2. in the forward region (30) the soulder (16) is formed by a shallow projection (32) and an inward running step (34) immediately below it,
3. in the forward region (30) of the mudguard below the first shoulder (16) the wheel opening (36) is displaced inwards and forwards relative to the direction of travel,
4. the wheel opening region (14) above the first shoulder (16) lies approximately in the same plane as the projection (26) of the first shoulder (16),
5. four holes (42) forming the corners of a rectangle are provided in the lower region of the part (40) lying below the first shoulder (16) in front of the wheel opening (14), in which in the assembled position of the mudguard (10) the distance from hole centre to hole centre in the horizontal direction is approximately 5 cm and the distance from hole centre to hole centre in the vertical direction is approximately 7 cm,
6. the sheet metal region (40) carrying the holes (42) forming the corners of a rectangle is formed so that projects slightly outwards (46) in relation to the sheet metal region (44) lying in front of it,
7. the sheet metal region (40) carrying the holes (42) forming the corners of a rectangle is bounded at the rear and lower region by a stiffening formation formed as an outward projection (48), a flange (50) with attachment hole (52) being provided at the bottom of this region and a flange (54) which runs inwards towards the displaced section of the wheel opening (14) being provided at the rear of this region,
8. in the forward region (30) of the mudguard (30) the sheet metal region (56) lying below the first shoulder (16) is bent inwards towards the front and terminates in a flange (58) pointing in the direction of travel,
9. another flange (62) with attachment opening (64) is provided in the forward end region of the first shoulder (16),
10. the upper part (68) of the mudguard (10) is extended inwards along a fold (66) along a line running essentially horizontally approximately 11 cm above the upper vertex of the wheel opening (14), in which the opening (70) for holding part of a headlamp/blinker unit has its upper extremity (72) in the forward region approximately at a level with this fold (66),
11. above the fold (66) a second shoulder (74) runs at an acute angle to the fold (66) in the direction of travel and is at a distance of approximately 6 cm from the fold in the forward region (76) and approximately 11 cm from the fold in the rear region (78),
12. the second shoulder (74) is formed by an inward step in the sheet metal in the upward direction,
13. above the second shoulder (74) the region (80) of the mudguard is curved inwards and in the rear region (82) projects inwards to reach the front roof column,
14. in front of the inward projecting region (82) to reach the front roof column the upper edge (84) of the mudguard (10) at the extremity of the region extended inwards at an inclination to the vertical by the curvature terminates in a flange (86) which is folded approximately vertically downwards and which after approximately 2.5 to 3 cm merges via a right-angle fold into a horizontal flange (88),
15. the upper flange (88) has attachment holes (90) which are between 15 and 20 cm apart.

2. Mudguard according to Claim 1, characterized in that the inward running flange (54) of the displaced section (36) of the wheel opening (14) has two slotted attachment holes (92) which are 12.5 cm apart.

3. Mudguard according to Claim 1 or 2, characterized in that the flange (58) which is extended forward in the forward region (56) of the mudguard has a reinforcing seam (94) leading back into the sheet metal region (56).

4. Mudguard according to one of Claims 1 to 3, characterized in that six holes (90) separated by distances from front to rear of approximately 20 cm, 20 cm, 20 cm, 15 cm and 18.5 cm are provided in the flange (88) bordering the upper edge (84) of the mudguard (12).

5. Mudguard according to one of Claims 1 to 4, characterized in that each of the holes (42) forming the four corners of a rectangle are square and have edge lengths of approximately 1 cm.

6. Mudguard according to one of Claims 1 to 5, characterized in that the sheet metal of the mudguard is galvanized.

## Revendications

1. Aile pour une voiture de tourisme, comportant un logement de roue,
   – un logement prévu dans une zone frontale pour recevoir partiellement une unité phare/clignotant, l'aile comportant au moins un décrochement orienté dans le sens de marche,
   – dans des zones marginales des rebords pour la fixation d'autres parties et pour le vissage sur des parties correspondantes de la caisse de la voiture de tourisme,
   – l'aile (10) s'étendant, dans le sens de marche (12) et en arrière du logement de roue (14), plus bas que devant le logement de roue,
   – un premier décrochement (16) est orienté dans une direction horizontale devant le logement de roue (14) et en arrière du logement de roue (14) à peu près sur les deux tiers de la hauteur entre le bord inférieur d'aile (22) et le sommet (20) du logement de roue (14),
   – le logement de roue (14) s'étend légèrement vers l'extérieur (38) au-dessus du premier décrochement (16), et
   – dans une zone frontale de l'aile, la partie en tôle (56) située en dessous du premier décrochement (16) revient vers l'intérieur et comporte un trou de fixation (60),
   – caractérisée par les particularités suivantes:
      1. le premier décrochement (16) est disposé à peu près à la moitié de la hauteur entre le bord inférieur d'aile (18) et le sommet supérieur (20) du logement de roue (14) et, dans une zone arrière (24) de l'aile, le premier décrochement (16) est formé par un bombement vers l'avant (26) et par un creux (28) situé en dessous,
      2. dans une zone frontale (30), le décrochement (16) est créé par un léger bombement vers l'avant (32) et par un gradin (34) venant à la suite en dessous et orienté vers l'intérieur,
      3. le bord (36) du logement de roue est décalé vers l'avant, dans une zone frontale d'aile (30), en dessous du premier décrochement (16) vers l'intérieur et dans le sens de marche vers l'avant,
      4. la zone (14) du logement de roue placé au-dessus du premier décrochement (16) est située à peu près dans le même plan que le bombement (26) du premier décrochement (16),
      5. dans une zone inférieure de la partie (40) située en dessous du premier décrochement (16) et en avant du logement de roue (14), il est prévu quatre trous (42) formant les sommets d'un rectangle et, dans la condition de montage de l'aile (10), l'entr'axe horizontal des trous s'élève à environ 5 cm tandis que l'entr'axe vertical des trous s'élève à environ 7 cm,
      6. la partie en tôle (40) comportant les trous (42) formant les sommets d'un rectangle est profilée légèrement en saillie vers l'extérieur (46) par comparaison à la partie en tôle (44) située devant elle,
      7. la partie en tôle (40) comportant les trous (42) formant les sommets d'un rectangle est délimitée dans une zone arrière et inférieure par une déformation de raidissage constituée par un bombement (48) dirigé vers l'extérieur et, dans cette zone et vers le bas, il est prévu un rebord (50) pourvu d'un trou de fixation (52) tandis que vers l'arrière et en direction de la partie décalée du logement de roue (14), il est prévu un rebord (54) dirigé vers l'intérieur,
      8. dans une zone frontale (30) de l'aile, la partie en tôle (56) située en dessous du premier décrochement (16) est cintrée progressivement vers l'avant et vers l'intérieur, de façon à se terminer par un rebord (58) dirigé dans le sens de marche,
      9. dans une zone extrême frontale du premier décrochement (16), il est prévu un autre rebord (62) pourvu d'une ouverture de fixation (64),
      10. le long d'une droite orientée sensiblement horizontalement et à peu près à 11 cm au-dessus du sommet supérieur du logement de roue (14), l'aile (10) est dirigée vers l'intérieur par sa partie supérieure (68) le long d'un coude (66) et, dans une zone frontale et à peu près à la hauteur de ce coude (66), la partie (70) est pourvue d'une obturation supérieure (72) pour recevoir partiellement l'unité phare/clignotant,
      11. au-dessus du coude (66), il est prévu, dans le sens de marche et selon un angle aigu par rapport au coude (66), un second décrochement (74) qui est espacé du coude d'environ 6 cm dans une zone avant (76) et d'environ 11 cm dans une zone arrière (78),
      12. le second décrochement (74) est constitué par un gradin orienté vers l'intérieur dans la partie de la tôle qui est dirigée vers le haut,
      13. au-dessus du second décrochement (74), la partie d'aile (80) est dirigée vers l'intérieur et arrondie tandis que, dans une zone arrière (82), elle fait saillie vers l'intérieur en direction du montant avant de toit,
      14. en avant de la zone (82) faisant saillie vers l'intérieur et pour son orientation vers le montant avant du toit, le bord supérieur (84) de l'aile (10) est obturé, à la fin de la zone dirigée en oblique vers l'intérieur du fait de l'arrondi par rapport à la verticale, au moyen d'un rebord (86) coudé vers le bas à peu près verticalement et qui se prolonge, après une distance d'environ 2,5 à 3 cm et en dessous d'un angle à droit, par un rebord horizontal (88),
      15. le rebord supérieur (88) comporte des trous de fixation (90) qui sont espacés l'un de l'autre d'une distance comprise entre 15 et 20 cm.

2. Aile selon la revendication 1, caractérisée en ce que la partie décalée (36) du logement de roue (14) comporte, dans son rebord (54) dirigé vers l'intérieur, deux trous oblongs (92) de fixation qui sont espacés de 12,5 cm.

3. Aile selon une des revendications 1 ou 2, caractérisée en ce que le rebord (58) dirigé vers l'avant dans une zone frontale (56) de l'aile comporte une moulure de renforcement (94) dirigée vers l'arrière jusque dans la partie en tôle (56).

4. Aile selon une des revendications 1 à 3, caractérisée en ce qu'il est prévu, dans le rebord (88) fermant le bord supérieur (84) de l'aile (12), six trous (90) dont les espacements mutuels s'élèvent, de l'avant vers l'arrière, à environ 20 cm, 20 cm, 20 cm, 15 cm et 18,5 cm.

5. Aile selon une des revendications 1 à 4, caractérisée en ce que les trous (42) formant les quatre sommets d'un rectangle sont réalisés chacun avec une forme carrée ayant une longueur de côté d'environ 1 cm.

6. Aile selon une des revendications 1 à 5, caractérisée en ce que la tôle de l'aile est galvanisée.

FIG.1

EP 0 253 989 B1

# FIG.2

EP 0 253 989 B1

# FIG. 3

EP 0 253 989 B1

FIG.4